# EUROPEAN PATENT SPECIFICATION

(11) **EP 2 587 490 B1**
(45) Date of publication and mention of the grant of the patent: **16.12.2015**
(21) Application number: 12190470.0
(22) Date of filing: 29.10.2012
(51) Int. Cl.: G21C 19/105, G21C 19/18

(54) **Nuclear fuel elements gripping tool provided with an emergency opening device**
Greifwerkzeug für Kernbrennelemente, das mit einer Notfallöffnungsvorrichtung versehen ist
Outil de préhension des éléments de combustible nucléaire pourvu d'un dispositif d'ouverture d'urgence

(30) Priority: 28.10.2011 IT MI20111966
(43) Date of publication of application: 01.05.2013
(73) Proprietor: Ansaldo Nucleare S.p.A., Genova (IT)
(72) Inventor: Orzelli, Francesco, Loano 17025 (IT)
(74) Representative: Bergadano, Mirko

(56) References cited:
- EP-A1- 0 533 547
- GB-A- 1 147 794
- GB-A- 1 215 802
- US-A- 3 319 992

## Description

The present invention relates to a gripping tool for gripping nuclear fuel elements, provided with an emergency opening device.

As known, the nuclear fuel elements in a nuclear reactor are moved by machines provided with special clamps, usually operated with pneumatic cylinders which releasably grip/clamp the fuel element to be moved. In the event of breakage of the clamp operating system, the possibility of releasing the fuel element anchored to the clamp is normally provided by a manual opening system of the clamp.

The clamps for moving the nuclear fuel are further commonly provided with passive safety devices that prevent the opening of the clamp and the release of the fuel element when it is raised.

In the event of failure of the passive safety device, conventional clamps do not allow the release of the load.

However, it is desirable to release the fuel element even in the event of failure of the passive safety device.

Known systems do not allow this possibility or they have improvement margins in terms of construction and operating simplicity, reliability, efficacy.

It is an object of the present invention to provide a tool for gripping nuclear fuel elements, provided with an emergency opening device which is particularly simple to be constructed and used as well as fully effective and reliable.

The present invention therefore relates to a gripping tool for gripping nuclear fuel elements, extending along an axis and comprising: a frame; a clamp set at a lower end of the frame for gripping a fuel element; an actuator system that operates the clamp for selectively gripping and releasing the fuel element; a safety locking device that locks the opening of the clamp when the clamp is loaded with the fuel element and prevents the release of the raised fuel element; the gripping tool being characterized by comprising a manually operated emergency opening device that acts on the actuator system for opening the clamp and allowing the release of the fuel element even if the clamp is locked by the safety locking device.

In particular, the emergency opening device comprises: an operating shaft, that extends along a rotation axis substantially parallel to the axis and is supported by the frame so as to be rotatable with respect to the frame about the axis; and an auxiliary toothed wheel, fitted onto the operating shaft and

For example, US3319992 and GB1147794 discloses emergency opening devices for opening the clamps of the nuclear fuel elements in case of failure of the safety locking device; the emergency opening devices act on the safety locking device and are electrically operated. engaging a main toothed wheel which is connected to a rod that operates, via an operation element, the opening and closing of the clamp.

In essence, the present invention consists of a manually operated emergency opening device which bypasses the safety locking device of the clamp and thus allows the clamp to be opened even in the event of blocking (failure) of the safety locking device.

The device according to the invention thus allows the fuel element to be released by acting on the clamp even if this is locked by the safety locking device, in a simple, fully effective and reliable manner.

Further features and advantages of the present invention will become apparent from the following description of a non-limiting embodiment thereof, made with reference to the figures in the accompanying drawings, in which:
- figure 1 shows a partial schematic longitudinal-section view of a nuclear fuel elements gripping tool, provided with an emergency opening device according to the invention, in a first operating position;
- figure 2 shows an enlarged scale view of a detail of the gripping tool in figure 1 in a different operating position;
- figure 3 shows the gripping tool in figure 1 in a further operating position.

In the accompanying figures, reference numeral 1 indicates as a whole a gripping tool for gripping nuclear fuel elements of a nuclear reactor. The gripping tool 1 is moved by a handling machine (not shown) to be moved both vertically and horizontally.

The gripping tool 1 extends along a substantially vertical axis A and comprises: a frame 2; a clamp 3, set at a lower end 4 of frame 2 for gripping a fuel element 5; an actuator system 6 that operates clamp 3 for selectively gripping and releasing the fuel element 5; a safety locking device 7, in particular a mechanical passive device that locks the opening of clamp 3 when it is loaded with the fuel element 5 (i.e. if the fuel element 5 is not leaning) and prevents the release of the raised fuel element 5; and an emergency opening device 10 that, on the contrary, allows the opening of clamp 3 and the release of the fuel element 5 even if the safety locking device 7 is jammed.

Frame 2 comprises a body 12, optionally consisting of multiple sections, extending along axis A and internally hollow or in any case provided with a longitudinal through seat 13; the lower end 4 of frame 2 supports clamp 3 and the safety locking device 7 associated with clamp 3; an upper end 14 of frame 2, opposite with respect to the lower end 4, is connected to the handling machine.

Clamp 3 comprises a plurality of fingers 15 hinged through respective pins 16 to a support structure 17 which is connected to frame 2 through the safety locking device 7. Fingers 15 are for example arranged about axis A and extend from the pins 16 substantially parallel to axis A, ending with respective transversal end teeth 18 shaped so as to engage a head of the fuel element 5. Fingers 15 are provided with respective pairs of projections 19 axially spaced apart and opposite with respect to teeth 18, cooperating with an operation element 20 which forms part of the actuator system 6.

The actuator system 6 comprises: an actuator 21 arranged at the upper end 14 of frame 2 and supported by frame 2, for example a pneumatic piston actuator having a piston 22 sliding along axis A; a pair of tubular elements 23, 24 aligned along axis A and sliding along axis A into respective guides 25 carried by frame 2; a main toothed wheel 26, rotatable about axis A and axially interposed between the tubular elements 23, 24, which extend from respective opposite faces of wheel 26; the operation element 20; a rod 27 integrally connected to the operation element 20 and slidingly housed along axis A inside the tubular element 24.

The tubular element 23 has an upper axial end 28 connected to the piston 22 of actuator 21, and a lower axial end 29 connected, by means of a joint 30, e.g. a ball joint, to wheel 26.

The tubular element 24 extends at the bottom from wheel 26, to which it is connected by a further joint 30, e.g. a ball joint, and has an open lower axial end 31 from which the operation element 20 projects.

Joints 30 are shaped so that the tubular elements 23, 24 support the wheel 26, and wheel 26 is axially integral with the tubular elements 23, 24, but angularly rotatable about axis A with respect to the tubular elements 23, 24.

Wheel 26 has an outer toothed lateral surface and an internally threaded, central inner seat 32 that defines a female screw.

The operation element 20 and the rod 27 integrally connected thereto extend along axis A and are slidingly housed into a seat 33 formed inside the tubular elements 23, 24 and the wheel 26.

In particular, the operation element 20 is arranged inside a lower end portion 34 of the tubular element 24, projecting from the open lower axial end 31 into structure 17; rod 27 is arranged inside the tubular elements 24, 24 and has an externally threaded portion 35 which engages the inner threaded seat 32 of wheel 26, defining a male/female screws coupling.

Structure 17 is arranged about a lower end portion 36 of frame 2 and is axially sliding with respect to frame 2 between two stroke end positions, defined by respective opposite axial shoulders 37 which are selectively engaged in abutment by a block 38 carried by portion 36.

The safety locking device 7 is shaped so as to lock the axial movements of the tubular element 24 when clamp 3 is raised.

In particular, the safety locking device 7 comprises a movable coupling 39 between the tubular element 24 and the frame 2, and releasable locking members 40 carried by frame 2 and selectively engaging respective hollows 41 formed in the tubular element 24 (namely, in the lower end portion 34 thereof) for selectively allowing and preventing the movement (specifically, the axial sliding along axis A) of the tubular element 24 with respect to frame 2.

In this case, the locking members 40, which are circumferentially spaced about axis A, comprise spherical bodies or balls 42 and are housed into respective radially through seats 43 formed in a side wall of the portion 36 of frame 2; the locking members 40 have radial dimensions (diameter, in case of spherical shape) exceeding the (radial) width of seats 43, thus they radially protrude therefrom; hollows 41 are formed on an outer lateral surface of the tubular element 24 (namely of portion 34); two series of axially spaced hollows 41 are provided. Further hollows 44 are formed on an inner lateral surface of structure 17.

The emergency opening device 10 comprises: an operating shaft 45 which extends along a rotation axis B substantially parallel to axis A and is supported by frame 2, for example via at least two axially opposite end pins inserted into respective seats of frame 2 so as to be rotatable with respect to frame 2 about axis B; and an auxiliary toothed wheel 46, fitted onto the operating shaft 45 and engaging the main toothed wheel 26.

An upper end of the operating shaft 45 has a head, for example hexagonal in shape, movable by an operator, for example by means of a dedicated spanner, so as to rotate the operating shaft 45 from the outside.

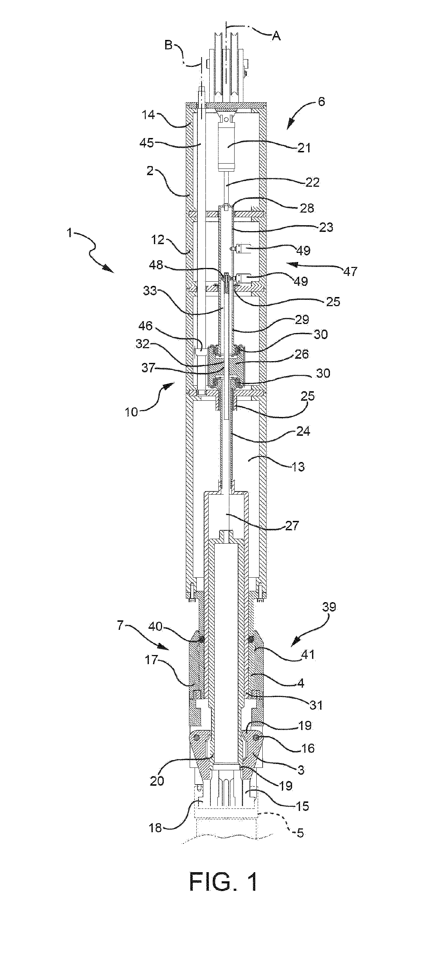

The gripping tool 1 is further preferably provided with a monitor system 47 in order to monitor the (open/closed) condition of clamp 3 and specifically, to detect the position of rod 27 along axis A; in the non-limiting example shown in figure 1, system 47 comprises a reference element 48 integrally carried by an upper portion of rod 27, for example a cam that laterally projects from rod 27, and a pair of sensors 49, for example micro switches, carried by frame 2 and axially spaced along axis A; the sensors 49 detect the position of the reference element 48 as they are operated by the passing of the reference element 48 (in the example, by the contact with the cam-shaped reference element 48).

In use, under normal operating conditions, clamp 3 is operated by the actuator system 6 and specifically by actuator 21, which moves clamp 3 through the kinematic chain consisting of piston 22, tubular elements 23, 24, main toothed wheel 26 with respective joints 30.

The operation element 20 is also simultaneously moved since it is axially connected to wheel 26 by means of the screw/female screw coupling between wheel 26 and rod 27; therefore, when clamp 3 is operated by the actuator 21, the operation element 20 and the tubular elements 23, 24 are axially integral.

The fuel element 5 is gripped by clamp 3 by means of fingers 15 which are operated by the operation element 20. By axially moving the operation element 20, the fingers 15 rotate about their pins 16 pushed by the operation element which acts on the cam portions 19: thereby, clamp 3 opens and closes.

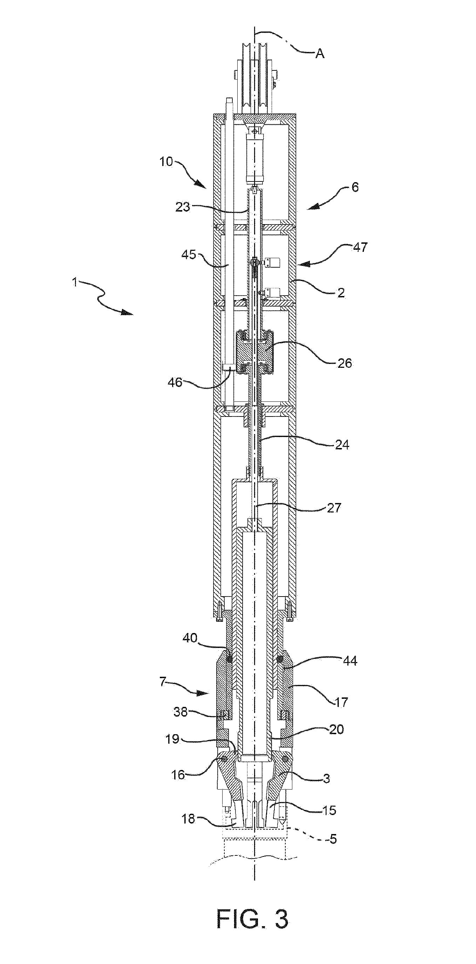

Figure 3 shows clamp 3 in open condition.

Structure 17 is free to axially move with respect to frame 2, by a travel limited by the shoulders 37 cooperating with block 38.

The vertical (axial) movement of structure 17 locks or leaves freedom of movement to the locking members 40, namely to balls 42. The diameter of balls 42 (in general, the transversal or radial dimension of the locking elements 40) is larger than the thickness of frame 2 (i.e. of the radial dimension of seats 43), whereby balls 42 protrude into the hollows 41 obtained on the tubular element 24, or into the hollows 44 of structure 17. When balls 42 are engaged into hollows 41 and are locked by structure 17 (condition shown in figure 1), the tubular element 24 is axially locked.

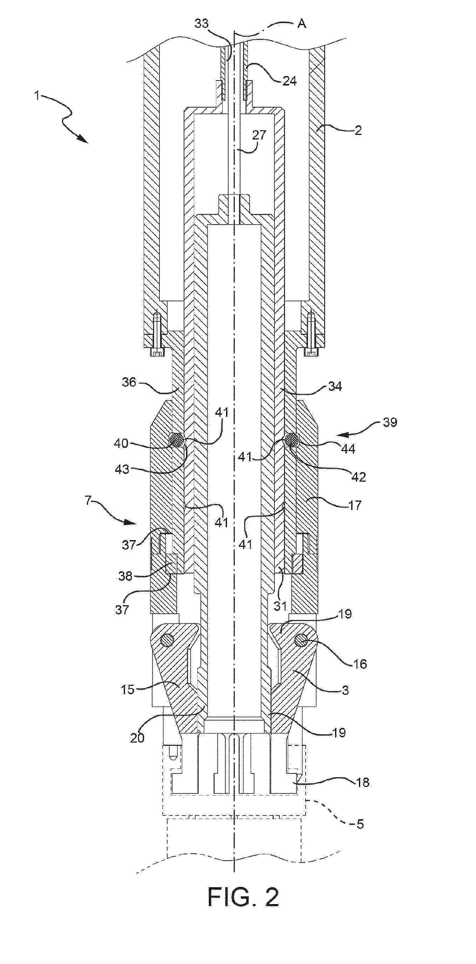

During normal operation, the operation element 20 is integral with the tubular element 24, therefore in order to open and close clamp 3, the structure 17 needs to be in the position shown in figure 2, in which balls 42 release the hollows 41 of the tubular element 24 moving into the hollows 44 of structure 17, and thus the tubular element 24 can move.

During an emergency condition, for example in case of failure or jamming of the safety locking device 7, the operator manually rotates the operating shaft 45, transferring the rotation to the main toothed wheel 26 through the auxiliary toothed wheel 46. Therefore, rod 27 vertically translates thanks to the screw/female screw coupling with the main toothed wheel 26.

The monitor system 47 monitors the condition of clamp 3 even upon a movement carried out with the emergency opening device 10; in fact, sensors 49 (micro switches) are operated by the reference element 48 integral with rod 27.

Finally, it is understood that changes and variations can be made to what described and shown herein without departing from the scope of the invention as defined in the appended claims.

## Claims

1. A nuclear fuel elements gripping tool (1) extending along an axis (A) and comprising: a frame (2); a clamp (3), set at a lower end (4) of the frame (2) for gripping a fuel element (5); an actuator system (6) that operates the clamp (3) for selectively gripping and releasing the fuel element (5); a safety locking device (7) that locks the opening of the clamp (3) when the clamp (3) is loaded with the fuel element (5) and prevents the release of the raised fuel element (5); the gripping tool (1) being **characterized by** comprising a manually operated emergency opening device (10) that acts on the actuator system (6) for opening the clamp (3) and allowing the release of the fuel element (5) even if the clamp (3) is locked by the safety locking device (7).

2. A gripping tool according to claim 1, wherein the emergency opening device (10) comprises: an operating shaft (45), that extends along a rotation axis (B) substantially parallel to the axis (A) and is supported by the frame (2) so as to be rotatable with respect to the frame (2) about the rotation axis (B); and an auxiliary toothed wheel (46), fitted to the operating shaft (45) and engaging a main toothed wheel (26) that is connected to a rod (27) that operates, via an operation element (20), the opening and closure of the clamp (3).

3. A gripping tool according to claim 2, wherein the main toothed wheel (26) is supported by a pair of tubular elements (23, 24) aligned along the axis (A) and set on opposite faces of the main toothed wheel (26) and slidable along the axis (A) in respective guides (25) carried by the frame (2) ; the main toothed wheel (26) being connected to the tubular elements (23, 24) by joints (30) configured in such a way the main toothed wheel (26) is axially integral with the tubular elements (23, 24) and angularly rotatable about the axis (A) with respect to the tubular elements (23, 24).

4. A gripping tool according to claim 2 or 3, wherein the rod (27) is connected integrally to the operation element (20); and the operation element (20) and the rod (27) are housed in a seat (33), formed inside the tubular elements (23, 24) and the main toothed wheel (26), and are movable along the axis (A) with respect to the seat (33).

5. A gripping tool according to one of claims 2 to 4, wherein the rod (27) is connected to the main toothed wheel (26) via a male/female screws coupling.

6. A gripping tool according to one of claims 2 to 5, wherein the main toothed wheel (26) has a toothed outer lateral surface that engages the auxiliary toothed wheel (46), and an internally threaded central internal seat (32), engaged by an externally threaded portion (35) of the rod (27).

7. A gripping tool according to one of claims 2 to 6, wherein an upper end of the operating shaft (45) has a head (47), for example hexagonal, movable by an operator, for example by means of a spanner, so as to rotate the operating shaft (45) from the outside.

8. A gripping tool according to one of claims 2 to 7, and comprising a monitor system (47) for monitoring the condition of the clamp (3) by detecting the position of the rod (27) along the axis (A), the monitor system (47) comprising a reference element (48), integrally carried by an upper portion of the rod (27), and a pair of sensors (49), that detect the position of the reference element (48) and are operated by the passing of the reference element (48).

9. A gripping tool according to one of the preceding claims, wherein the safety locking device (7) comprises a movable coupling (39) between the frame (2) and a tubular element (24) moved by the actuator system (6), and releasable locking members (40), carried by the frame (2) and that selectively engage respective hollows (41) formed in the tubular element (24), for selectively permitting and stopping the movement of the tubular element (24) with respect to the frame (2).

## Patentansprüche

1. Greifwerkzeug (1) für Kernbrennelemente, welches sich entlang einer Achse (A) erstreckt und aufweist: einen Rahmen (2); eine Klammer (3), die an einem unteren Ende (4) des Rahmens (2) zum Greifen eines Brennelements (5) angeordnet ist; ein Betätigungssystem (6), das die Klammer (3) zum wahlweisen Greifen oder Loslassen des Brennelements (5) betätigt; eine Sicherheitsverriegelungsvorrichtung (7), welche das Öffnen der Klammer (3) sperrt, wenn die Klammer (3) mit dem Brennelement (5) beladen ist, und das Loslassen des angehobenen Brennelements (5) verhindert; wobei das Greifwerkzeug (1) **dadurch gekennzeichnet ist, dass** es eine manuell betätigte Notöffnungsvorrichtung (10) aufweist, welche auf das Betätigungssystem (6) zum Öffnen der Klammer (3) einwirkt und das Loslassen des Brennelements (5) ermöglicht, selbst wenn die Klammer (3) durch die Sicherheitsverriegelungsvorrichtung (7) verriegelt ist.

2. Greifwerkzeug nach Anspruch 1, bei welchem die Notöffnungsvorrichtung (10) aufweist: eine Betätigungswelle (45), die sich entlang einer Drehachse (B) im Wesentlichen parallel zur Achse (A) erstreckt und von dem Rahmen (2) gestützt ist, so dass sie in Bezug auf den Rahmen (2) um die Drehachse (B) drehbar ist; und ein Hilfszahnrad (46), das auf die Betätigungswelle (45) gesetzt ist und mit einem Hauptzahnrad (26) kämmt, welches mit einer Stange (21) verbunden ist, die über ein Betätigungselement (20) das Öffnen und Schließen der Klammer (3) bewirkt.

3. Greifwerkzeug nach Anspruch 2, bei welcher das Hauptzahnrad (26) durch zwei rohrförmige Elemente (23, 24) gestützt ist, welche entlang der Achse (A) ausgerichtet und auf entgegengesetzten Seiten des Hauptzahnrades (26) angeordnet sind und in jeweiligen von dem Rahmen (2) getragenen Führungen (25) entlang der Achse (A) gleitend verschiebbar sind; wobei das Hauptzahnrad (26) mit den rohrförmigen Elementen (23, 24) durch Gelenke (30) verbunden ist, die derart ausgebildet sind, dass das Hauptzahnrad (26) in Axialrichtung integral mit den rohrförmigen Elementen (23, 24) ist und winkelmäßig um die Achse (A) bezogen auf die rohrförmigen Elemente (23, 24) drehbar ist.

4. Greifwerkzeug nach Anspruch 2 oder 3, bei welchem die Stange (27) einstückig mit dem Betätigungselement (20) verbunden ist; und wobei das Betätigungselement (20) und die Stange (27) in einem Sitz (33) aufgenommen sind, welcher in den rohrförmigen Elementen (23, 24) und dem Hauptzahnrad (26) ausgebildet ist, und in Bezug auf den Sitz (33) entlang der Achse (A) bewegbar sind.

5. Greifwerkzeug nach einem der Ansprüche 2 bis 4, bei welchem die Stange (27) mit dem Hauptzahnrad (26) über eine Außen-/Innengewinde-Schraubverbindung verbunden ist.

6. Greifwerkzeug nach einem der Ansprüche 2 bis 5, bei welcher das Hauptzahnrad (26) eine gezahnte Außenseitenfläche, die mit dem Hilfszahnrad (44) kämmt, und einen mit einem Innengewinde versehenen mittigen Innensitz (32), mit welchem ein mit einem Außengewinde versehener Bereich (35) der Stange (27) kämmt.

7. Greifwerkzeug nach einem der Ansprüche 2 bis 6, bei welchem ein oberes Ende der Betätigungswelle (45) einen beispielsweise sechskantigen Kopf (47) aufweist, der durch eine Betätigungseinrichtung, beispielsweise mittels eines Schraubenschlüssels, bewegbar ist, um die Betätigungswelle (45) von außen zu drehen.

8. Greifwerkzeug nach einem der Ansprüche 2 bis 7, und mit einem Überwachungssystem (47) zum Überwachen des Zustandes der Klammer (3) durch Erkennen der Position der Stange (27) entlang der Achse (4), wobei das Überwachungssystem (47) ein Referenzelement (48), das einstückig von einem oberen Bereich der Stange (27) getragen ist, und zwei Sensoren (49) aufweist, welche die Position des Referenzelements (48) erkennen und durch das Passieren des Referenzelements (48) betätigt werden.

9. Greifwerkzeug nach einem der vorangehenden Ansprüche, bei welchem die Sicherheitsverriegelungsvorrichtung (7) eine bewegbare Kupplung (39) zwischen dem Rahmen (2) und einem von dem Betätigungssystem (6) bewegten rohrförmigen Element (24) und lösbare Verriegelungselemente (40) aufweist, die von dem Rahmen (2) getragen sind und in jeweilige Hohlräume (41) eingreifen, die in dem rohrförmigen Element (24) ausgebildet sind, um das Bewegen des rohrförmigen Elements (24) in Bezug auf den Rahmen (2) wahlweise zu erlauben oder zu stoppen.

## Revendications

1. Outil de préhension d'éléments de combustible nucléaire (1) s'étendant le long d'un axe (A) et comprenant : un châssis (2) ; une pince (3), fixée à une extrémité inférieure (4) du châssis (2) pour saisir un élément de combustible (5) ; un système d'actionnement (6) qui actionne la pince (3) pour, sélectivement, saisir et libérer l'élément de combustible (5) ; un dispositif de verrouillage de sécurité (7) qui verrouille l'ouverture de la pince (3) lorsque la pince (3) est chargée de l'élément de combustible (5) et empêche la libération de l'élément de combustible (5) soulevé ; l'outil de préhension (1) étant **caractérisé en ce qu'**il comprend un dispositif d'ouverture d'urgence à commande manuelle (10) qui agit sur le système d'actionnement (6) pour ouvrir la pince (3) et permettre la libération de l'élément de combustible (5) même si la pince (3) est verrouillée par le dispositif de verrouillage de sécurité (7).

2. Outil de préhension selon la revendication 1, dans lequel le dispositif d'ouverture d'urgence (10) comprend : un arbre d'actionnement (45), qui s'étend le long d'un axe de rotation (B) sensiblement parallèle à l'axe (A) et est supporté par le châssis (2) afin de pouvoir être entraîné en rotation par rapport au châssis (2) autour de l'axe de rotation (B) ; et une roue dentée auxiliaire (46) montée sur l'arbre d'actionnement (45) et engageant une roue dentée principale (26) qui est reliée à une tige (27) qui actionne, par le biais d'un élément de manoeuvre (20), l'ouverture et la fermeture de la pince (3).

3. Outil de préhension selon la revendication 2, dans lequel la roue dentée principale (26) est supportée par une paire d'éléments tubulaires (23, 24) alignés le long de l'axe (A) et placés sur des faces opposées de la roue dentée principale (26) et aptes à glisser le long de l'axe (A) dans des guides respectifs (25) supportés par le châssis (2) ; la roue dentée principale (26) étant reliée aux éléments tubulaires (23, 24) par des raccords (30) configurés de manière que la roue dentée principale (26) soit d'un seul tenant axialement avec les éléments tubulaires (23, 24) et apte à tourner angulairement autour de l'axe (A) par rapport aux éléments tubulaires (23, 24).

4. Outil de préhension selon la revendication 2 ou 3, dans lequel la tige (27) est reliée d'un seul tenant à l'élément de manoeuvre (20), et l'élément de manoeuvre (20) et la tige (27) sont logés dans un siège (33), formé à l'intérieur des éléments tubulaires (23, 24) et de la roue dentée principale (26), et sont aptes à se déplacer le long de l'axe (A) par rapport au siège (33).

5. Outil de préhension selon l'une des revendications 2 à 4, dans lequel la tige (27) est reliée à la roue dentée principale (26) par le biais d'un accouplement mâle/femelle à vis.

6. Outil de préhension selon l'une des revendications 2 à 5, dans lequel la roue dentée principale (26) présente une surface latérale externe dentée qui engage la roue dentée auxiliaire (46), et un siège interne central taraudé (32), engagé par une partie filetée (35) de la tige (27).

7. Outil de préhension selon l'une des revendications 2 à 6, dans lequel une extrémité supérieure de l'arbre d'actionnement (45) comporte une tête (47), par exemple hexagonale, apte à être déplacée par un opérateur, par exemple au moyen d'une clé, afin de faire tourner l'arbre d'actionnement (45) depuis l'extérieur.

8. Outil de préhension selon l'une des revendications 2 à 7, et comprenant un système de contrôle (47) pour contrôler l'état de la pince (3) par détection de la position de la tige (27) le long de l'axe (A), le système de contrôle (47) comprenant un élément de référence (48), supporté d'un seul tenant par une partie supérieure de la tige (27), et une paire de capteurs (49), qui détectent la position de l'élément de référence (48) et sont actionnés par le passage de l'élément de référence (48).

9. Outil de préhension selon l'une quelconque des revendications précédentes, dans lequel le dispositif de verrouillage de sécurité (7) comprend un accouplement mobile (39) entre le châssis (2) et un élément tubulaire (24) déplacé par le système d'actionnement (6), et des éléments de verrouillage débrayables (40), supportés par le châssis (2) et qui engagent sélectivement des creux (41) respectifs ménagés dans l'élément tubulaire (24), pour, sélectivement, permettre et arrêter le mouvement de l'élément tubulaire (24) par rapport au châssis (2).
